# NEUE EUROPÄISCHE PATENTSCHRIFT

(11) **EP 3 250 889 B2**
(45) Veröffentlichungstag und Bekanntmachung des Hinweises auf die Entscheidung über den Einspruch: **24.06.2026**
(45) Hinweis auf die Patenterteilung: 13.02.2019
(21) Anmeldenummer: 15805540.0
(22) Anmeldetag: 09.12.2015
(51) Int. Cl.: G01D 5/14, G01D 5/244, H02K 11/01, H02K 11/215

(54) **MAGNET-BASIERTES DREHWINKELMESSSYSTEM**
MAGNET-BASED ANGULAR DISPLACEMENT MEASURING SYSTEM
SYSTÈME MAGNÉTIQUE DE MESURE D'ANGLE DE ROTATION

(30) Priorität: 28.01.2015 DE 102015101248
(43) Veröffentlichungstag der Anmeldung: 06.12.2017
(73) Patentinhaber: Fraba B.V., 6416 SG Heerlen (NL)
(72) Erfinder: FORTHAUS, Martin, 50829 Köln (DE)
(74) Vertreter: terpatent PartGmbB
(86) Internationale Anmeldenummer: PCT/EP2015/079121
(87) Internationale Veröffentlichungsnummer: WO 2016/119962

(56) Entgegenhaltungen:
- EP-A2- 2 159 547
- DE-A1- 102008 051 479
- DE-A1- 102009 004 780
- DE-A1- 102009 051 978
- DE-A1- 102013 103 445

## Beschreibung

Die Erfindung betrifft ein Magnet-basiertes Drehwinkelmesssystem zum Erfassen einer Drehbewegung einer Antriebswelle, mit einer Antriebswelle, einer mit der Antriebswelle an einem freien bzw. axialen Ende drehfest verbundenen Erregereinheit, und einer feststehenden Sensoreinheit, die zum Erfassen einer Drehbewegung der Antriebswelle mit der Erregereinheit funktional zusammenwirkt.

Derartige Drehwinkelmesssysteme dienen zur Messung von Drehbewegungen einer Welle und werden vielfach auch als Winkelmesseinrichtung, Drehwinkelsensor oder Drehgeber bezeichnet. Sie werden insbesondere zur Steuerung und Überwachung von Maschinen und Fahrzeugen eingesetzt. Eine besondere Rolle spielen dabei kontaktfreie Drehwinkelmesssysteme, beispielsweise elektrisch oder magnetisch induzierte Systeme, da sie aufgrund der verschleissfreien Sensorik eine lange Lebensdauer haben. Bei Magnet-basierten Drehwinkelmesssystemen, insbesondere bei magnetischen Multiturn-Absolutwertgebern, wird die Umdrehung einer Welle mittels einer Messeinheit induktiv erfasst, wobei die Messeinheit insbesondere eine rotierende Erregereinheit, wie einen Permanentmagnet, und eine feststehende Sensoreinheit mit zumindest einem Sensor, wie beispielsweise einem Hall- und/oder Wiegand-Sensor, umfasst. Hierzu ist die Messeinheit zumeist an dem freien Ende der zu überwachenden Welle angeordnet.

Bei der Anordnung bzw. dem Anbau eines Magnet-basierten Drehwinkelmesssystems unmittelbar an eine Antriebswelle, insbesondere an einer Antriebswelle eines Elektromotors bzw. Elektrogenerators, treten jedoch häufig geringe Messfehler auf. Solche Messfehler sind zumeist durch von außen auf das Drehwinkelmesssystem einwirkende Störgrößen verursacht. Eine solche Störgröße ist beispielsweise ein Magnetfeld, das dadurch hervorgerufen ist, dass die Antriebswelle im Betrieb von dem Elektromotor oder von einer elektromagnetischen Bremse magnetisiert wird und das Magnetfeld durch die typischerweise aus Stahl hergestellte Welle weitergeleitet wird und schließlich an dem Drehwinkelmesssystem das durch die Erregereinheit gebildete rotatorische Magnetfeld verändert, so dass in der Sensoreinheit Messfehler verursacht werden. Zur Verbesserung der Messgenauigkeit ist daher eine Vermeidung solcher Störungen in dem Drehwinkelmesssystem erforderlich.

Aus der DE 38 13 610 A1 ist eine Winkelmesseinrichtung mit einer Abtasteinrichtung bekannt, bei der die Abtasteinrichtung gegenüber elektrischen Störeinflüssen abgeschirmt ist. Dazu ist die Abtasteinrichtung in einem Gehäuse elektrisch isoliert befestigt und mit dem Massepotential einer Auswerteeinheit verbunden. Zudem steht das Gehäuse mit der Antriebseinheit in elektrischen Kontakt, so dass die von der Ansteuerung der Antriebseinheit ausgehenden Störsignale keine nachteiligen Auswirkungen auf die Messwerte haben.

Gattungsgemäße Drehwinkelmesssysteme sind aus den Druckschriften DE 10 2008 051 479 A1, EP 2 159 547 A2, DE 10 2013 103 445 A1, DE 10 2009 004 780 A1 und DE 10 2009 051 978 A1 bekannt.

Nachteilig hierbei ist jedoch, dass magnetisch induzierte Störeinflüsse nicht abgeschirmt sind und dadurch insbesondere bei Magnet-basierten Winkelmesseinrichtungen in der Sensoreinheit nach wie vor Messfehler verursacht werden. Darüber hinaus ist die Einrichtung zur Abschirmung der Winkelmesseinrichtung sehr komplex aufgebaut und umfasst eine Vielzahl von Bauteilen.

Der Erfindung liegt daher die Aufgabe zugrunde, ein Drehwinkelmesssystem zum Erfassen einer Drehbewegung einer Antriebswelle bereitzustellen, das eine exakte und störungsfreie Messung, einen einfachen Aufbau und eine unkomplizierte Montage ermöglicht.
Die Lösung der Aufgabe erfolgt erfindungsgemäß durch ein Drehwinkelmesssystem mit den Merkmalen des Anspruchs 1.

Erfindungsgemäß weist die Antriebswelle im Bereich des freien Endes eine koaxiale Ausnehmung bzw. Vertiefung auf, so dass in diesem Bereich der Antriebswelle ein Hohlwellenabschnitt ausgebildet ist, wobei die Erregereinheit mittels einer sich durch die Ausnehmung erstreckenden Befestigungseinrichtung an der Antriebswelle festgelegt ist, wobei in dem Bereich des Hohlwellenabschnitts zwischen der Antriebswelle und der Befestigungseinrichtung ein radialer Luftspalt ausgebildet ist. Die Antriebswelle kann vorliegend ein separat ausgebildetes Wellenteilstück, eine Getriebewelle oder auch unmittelbar die Welle eines Elektromotors oder einer magnetischen Bremse sein. Die Antriebswelle kann zumindest teilweise als Vollwelle ausgebildet sein. Durch die Ausbildung der koaxialen Ausnehmung kann ein in der Antriebswelle induziertes Magnetfeld im Bereich des freien Endes in einen radialen Außenbereich der Antriebswelle geleitet und dort beispielsweise für eine Ableitung konzentriert werden. Insbesondere ist durch die Ausnehmung eine Ableitung eines in der Antriebswelle erzeugten Magnetfelds nach radial außen hin ermöglicht. Dadurch kann ein von dem Hohlwellenabschnitt radial umgebener Hohlraum nahezu magnetisch isoliert werden, so dass dieser Bereich für eine Kopplung einer Messeinheit an der Antriebswelle besonders gut geeignet ist. Dazu ist die Befestigungseinrichtung der Erregereinheit vorteilhafterweise in dem Bereich der Ausnehmung unmittelbar an der Antriebswelle angeordnet. Dadurch ist eine zusätzliche Welle für die Messeinheit nicht erforderlich. Zur Anordnung der beispielsweise als eine axiale Schraube ausgebildeten Befestigungseinrichtung kann in der Antriebswelle am Grund der Ausnehmung eine Bohrung ausgebildet sein, wobei die Bohrung vorzugsweise koaxial zu der Antriebswelle ist und ein mit der Schraube korrespondierendes Gewinde aufweist. Dadurch kann die Erregereinheit in relativ einfacher Weise an dem freien Ende der Antriebwelle montiert werden. Alternativ kann die Befestigungseinrichtung durch eine radial in die Antriebswelle einsetzbare Schraube, insbesondere eine Madenschraube, gebildet sein. Zusätzlich oder alternativ kann ein Verkleben der Erregereinheit an der Antriebswelle vorgesehen sein. Die Befestigungseinrichtung an sich ist vorzugsweise aus einem magnetisch nicht oder nur gering leitfähigen Material hergestellt. Beispielsweise ist die Befestigungseinrichtung aus Titan oder Messing hergestellt, so dass eine Weiterleitung des in der Antriebswelle oder einem Wellenabschnitt induzierten Magnetfeldes durch die Befestigungseinrichtung hin zu der Erregereinheit verhindert werden kann.

Erfindungsgemäß ist in dem Bereich des Hohlwellenabschnitts zwischen der Antriebswelle und der Befestigungseinrichtung ein radialer Luftspalt ausgebildet. Dazu kann der Durchmesser der Ausnehmung jeweils derart groß sein, dass die Befestigungseinrichtung sich zumindest im Bereich des freien Endes berührungsfrei durch die Ausnehmung bzw. durch den Hohlwellenabschnitt erstrecken kann. Am Grund der Ausnehmung ist bevorzugt eine zweite axiale Stirnseitenfläche der Antriebswelle ausgebildet, an der die Befestigungseinrichtung mit der Antriebswelle in Berührung steht und an der Antriebswelle befestigt ist. In einer Ausgestaltung ist die Befestigungseinrichtung zumindest in dem Bereich des Hohlwellenabschnitts von einem Abstandshalter bzw. einer Abstandshülse umgeben, der bzw. die aus einem magnetisch nichtleitfähigen Material besteht. Dadurch kann die Schraube besonders effektiv magnetisch isoliert werden, so dass eine magnetische Induktion der Schraube im Bereich des Hohlwellenabschnitts verhindert werden kann. Die Anordnung der Abstandshülse kann insbesondere bewirken, dass das magnetische Feld bei Übertragung zwischen zwei Leitern relativ weit zerstreut wird, um lokale magnetische Sättigung des aufnehmenden Materials zu verhindern.

Die Ausnehmung an dem freien Ende der Antriebswelle ist bevorzugt kegelstumpfförmig ausgebildet, so dass der im Bereich des Hohlwellenabschnitts verbleibende und der Vollwelle axial hervorstehende Materialring sich in Richtung des freien Endes konisch verjüngt bzw. spitz zusammenläuft. Diese Kegelstumpfform ermöglicht eine relativ gleichmäßige Ableitung eines in der Antriebswelle erzeugten Magnetfelds nach radial außen hin. Alternativ - und je nach Anforderung - kann die Ausnehmung auch halbkugelförmig oder in einer anderen Form ausgebildet sein.

Erfindungsgemäß ist ein erster Abschirmkörper vorgesehen, der eine zu der Antriebswelle koaxiale Ringscheibe, die, vorzugsweise axial, zwischen der Erregereinheit und der Antriebswelle angeordnet ist, und einen radial außen an der Ringscheibe umlaufenden ersten axialen Abschnitt aufweist. Die Ringscheibe weist bevorzugt eine koaxiale Öffnung auf, durch die sich zumindest die Befestigungseinrichtung erstreckt. Vorzugsweise ist der Durchmesser dieser Öffnung nur geringfügig größer, als der der Befestigungseinrichtung. Die Öffnung kann auch zur Zentrierung der Ringscheibe gegenüber der Befestigungseinrichtung dienen. Ferner kann sich auch ein Teil der Antriebswelle durch diese Öffnung erstrecken. Der erste axiale Abschnitt kann der Ringscheibe einseitig hervorstehen. Alternativ steht der erste axiale Abschnitt beidseitig, insbesondere zu gleichen Teilen, an der Ringscheibe hervor. Hierbei kann der erste axiale Abschnitt die Antriebswelle in dem Bereich des Hohlwellenabschnitts zumindest teilweise umgeben. Dadurch ist ein relativ platzsparender Aufbau des Drehwinkelmesssystems ermöglicht. Der erste axiale Abschnitt kann als ein Zylinderabschnitt ausgebildet sein, so dass eine sehr große umlaufende Fläche geschaffen ist. Der erste Abschirmkörper ist bevorzugt magnetisch leitfähig bzw. weist bevorzugt eine relativ hohe magnetische Permeabilität auf, so dass ein beispielsweise im Bereich der Öffnung der Ringscheibe induziertes Magnetfeld durch die Ringscheibe nach radial außen hin und durch den radial außen an der Ringscheibe angeordneten ersten axialen Abschnitt weitergeleitet bzw. an ein benachbartes Bauteil übertragen werden kann. Bevorzugt ist der erste Abschirmkörper aus einem sogenannten Mu-Metall, einer Nickel-Eisen-Legierung, hergestellt. Alternativ ist der erste Abschirmkörper aus Stahl hergestellt. Dadurch sind eine Umlenkung eines in der Antriebswelle erzeugten Magnetfeldes und somit eine effektive Abschirmung der Messeinheit des Drehwinkelmesssystems ermöglicht.

In einer nicht in den Schutzbereich fallenden Ausführung kann der erste Abschirmkörper mit der Antriebswelle drehfest verbunden sein. Dazu kann der erste Abschirmkörper mit einer axialen Stirnseitenfläche der Ringscheibe an dem freien Ende des Hohlwellenabschnitts und/oder an einem Abstandshalter anliegen und beispielsweise mittels der Befestigungseinrichtung der Erregereinheit an der Antriebswelle befestigt sein. Dadurch kann ein in der Antriebswelle erzeugtes und in dem Hohlwellenabschnitt anliegendes Magnetfeld unmittelbar über die Stirnseitenfläche in die Ringscheibe geleitet werden. Innerhalb der Ringscheibe kann das induzierte Magnetfeld zur Abschirmung der Messeinheit nach radial außen hin in den ersten axialen Abschnitt geleitet werden. Dadurch ist eine besonders effektive und relativ platzsparende Abschirmung der Messeinheit geschaffen.

Es hat sich gezeigt, dass für eine gleichmäßige und konstante Übertragung eines Magnetfeldes von der Antriebswelle an den ersten Abschirmkörper ein definierter Abstand zwischen dem ersten Abschirmkörper und der Antriebswelle geeignet ist. Daher kann zwischen dem ersten Abschirmkörper und der Antriebswelle in einer nicht in den Schutzbereich fallenden Ausführung ein erster Abstandshalter angeordnet sein, Der erste Abstandshalter ist vorzugsweise aus einem magnetisch nicht leitenden oder magnetisch gering leitenden Material hergestellt. Vorzugszugsweise ist der erste Abstandshalter geeignet, das freie Ende der Antriebswelle sowohl axial als auch radial zu umgeben. Insbesondere ist der erste Abstandshalter als eine auf das freie Ende aufsteckbare Hülse ausgebildet. Dadurch kann der erste Abschirmkörper sowohl in axialer als auch in radialer Richtung in Bezug auf die Antriebswelle in einem definierten Abstand angeordnet und fixiert werden. Zur Befestigung des ersten Abstandshalters weist der erste Abstandshalter vorzugsweise eine Öffnung auf, durch die sich die Befestigungseinrichtung erstreckt, so dass der erste Abstandshalter in Richtung der Antriebswelle vorgespannt werden kann.

Um eine Weiterleitung eines Magnetfeldes von dem ersten Abschirmkörper zu der Erregereinheit zu vermeiden, kann in einer nicht in den Schutzbereich fallenden Ausführung zwischen dem ersten Abschirmkörper und der Erregereinheit ein zweiter Abstandshalter angeordnet sein. Der zweite Abstandshalter ist bevorzugt aus einem magnetisch nicht oder nur gering leitenden Material hergestellt. Der zweite Abstandshalter kann eine Unterlegscheibe sein, die zur Fixierung in eine Aussparung an dem ersten Abschirmkörper eingesetzt werden kann.

Der erste Abschirmkörper weist vorzugsweise einen zweiten axialen Abschnitt auf, mit dem der erste Abschirmkörper an der Antriebswelle und/oder an dem Abstandshalter radial anliegen kann. Insbesondere kann der erste Abschirmkörper mit dem zweiten axialen Abschnitt über das freie Ende der Antriebswelle und/oder über den Abstandshalter aufgesetzt bzw. aufgestülpt sein. Dadurch ist eine sehr große Übertragungsfläche zum Übertragen eines Magnetfeldes von der Antriebswelle an den ersten Abschirmkörper ermöglicht. Die Übertragung eines Magnetfeldes kann somit stirnseitig und/oder radial an der Antriebswelle erfolgen. Ferner ist eine relativ einfache und präzise Zentrierung ermöglicht.

In einer Ausführung der Erfindung ist der erste Abschirmkörper zumindest mit einer axialen Stirnseitenfläche der Ringscheibe, die dem freien Ende der Antriebswelle gegenüberliegend angeordnet ist, in einem definierten axialen Abstand von dem freien Ende des Hohlwellenabschnitts beanstandet angeordnet. Ferner kann der erste Abschirmkörper auch radial beanstandet von der Antriebswelle angeordnet sein. Erfindungsgemäß ist ein axialer und/oder radialer Luftspalt zwischen dem ersten Abschirmkörper und der Antriebswelle ausgebildet, so dass der erste Abschirmkörper gegenüber der Antriebswelle feststehendist. Zur Übertragung eines Magnetfeldes von der Antriebswelle zu dem ersten Abschirmkörper ist der Durchmesser der inneren Öffnung der Ringscheibe bevorzugt kleiner als der innere Durchmesser des Hohlwellenabschnitts der Antriebswelle an dem freien Ende. Dadurch ist ein an dem freien Ende der Antriebswelle in dem Hohlwellenabschnitt vorherrschendes Magnetfeld über den zwischen der Antriebswelle und dem erstem Abschirmkörper ausgebildeten Luftspalt in begrenztem Maße axial auf die Ringscheibe übertragbar bzw. induzierbar. Dadurch kann das Magnetfeld insbesondere gleichmäßig und kontinuierlich übertragen werden, ohne dass es zu einer magnetischen Übersättigung in der Ringscheibe kommt. Der hier angesprochene Luftspalt kann in einer alternativen Ausgestaltung auch durch einen magnetisch nicht leitenden Abstandshalter ersetzt bzw. realisiert sein. Ferner können die Ringscheibe und der axiale Abschnitt des ersten Abschirmkörpers zur effektiven Umleitung des Magnetfeldes relativ materialschwach bzw. dünn ausgebildet sein. Dadurch sind eine effektive Abschirmung und ein relativ geringes Gewicht des Drehwinkelmesssystems ermöglicht, so dass letztlich auch die Herstellungskosten verringert sind.

Besonders bevorzugt ist ein zweiter Abschirmkörper vorgesehen, der einen axialen Zylinderabschnitt aufweist, der zumindest den ersten axialen Abschnitt des ersten Abschirmkörpers radial umgibt, wobei zwischen dem ersten axialen Abschnitt und dem axialen Zylinderabschnitt ein definierter Luftspalt ausgebildet ist. Bevorzugt ist der erste Abschirmkörper magnetisch leitfähig und aus Stahl oder einem sogenannten Mu-Metall hergestellt. Der radiale Abstand zwischen dem ersten Abschirmkörper und dem zweiten Abschirmkörper kann über die axiale Länge des Zylinders konstant sein. Dadurch kann eine großflächige und gleichmäßige Übertragung eines Magnetfeldes bewirkt werden. Ferner kann bei einer Montage der zweite Abschirmkörper in relativ einfacher Weise über den ersten Abschirmkörper aufgesetzt werden. Der zweite Abschirmkörper kann feststehend und insbesondere als ein Außengehäuse zumindest der Messeinheit ausgebildet sein. Folglich kann ein in den rotierenden Bauteilen des Drehwinkelmesssystems erzeugtes Magnetfeld an einer Übergabestelle an zumindest ein feststehendes Bauteil, insbesondere an den zweiten Abschirmkörper, übertragen werden. Dadurch kann die Fläche zur Abschirmung vergrößert werden, ohne dass zusätzliche rotierende Bauteile und ein damit verbundenes zusätzliches Mehrgewicht an der Antriebswelle erforderlich sind. Ferner kann eine effektive Abschirmung gegenüber einem von außen erzeugten Magnetfeld geschaffen werden.

Der erste Abschirmkörper und/oder der zweite Abschirmkörper können zumindest einen axialen Lagerabschnitt aufweisen, an dem ein Lager der Antriebswelle anliegt. Beispielsweise weist der erste Abschirmkörper und/oder der zweite Abschirmkörper einen Absatz auf, an dem ein Wellenlager der Antriebswelle anliegt. Dadurch ist eine genaue Ausrichtung des Drehwinkelmesssystems bzw. der Messeinheit bezüglich der Antriebswelle sowie ein platzsparender Aufbau ermöglicht.

Der erste Abschirmkörper und/oder der zweite Abschirmkörper können zumindest einen Absatz aufweisen, an dem die Sensoreinheit und/oder ein Gehäuse befestigt sind. Beispielsweise kann an dem ersten Abschirmkörper und/oder an dem zweiten Abschirmkörper ein Flansch mit einem Schraubenlochmuster ausgebildet sein, an dem das Gehäuse mit einem korrespondierenden Gegenflansch und einem korrespondierenden Schraubenlochmuster mittels Schrauben befestigt ist. Der jeweilige Abschirmkörper kann seinerseits ebenfalls über diesen oder einen weiteren Absatz beispielsweise maschinenseitig festlegbar sein. Ferner kann an dem Absatz der erste Abschirmkörper an dem zweiten Abschirmkörper befestigt sein. Darüber hinaus kann an dem ersten Abschirmkörper und/oder zweiten Abschirmkörper ein Absatz oder Steg zum Befestigen der Sensoreinheit vorgesehen sein. Insbesondere weist der zweite Abschirmkörper einen Absatz auf, an dem ein Sensorträger axial eingesetzt und befestigt werden kann. Dadurch können zum Einen die Komponenten des Drehwinkelmesssystems zueinander ausgerichtet werden, so dass ein zwischen rotierenden und feststehenden Komponenten ausgebildeter Luftspalt relativ klein sein kann, zum Anderen kann das Drehwinkelmesssystem relativ platzsparend aufgebaut sein.

Vorzugsweise ist ein Gehäuse vorgesehen, das das Drehwinkelmesssystem zumindest teilweise umgibt. Insbesondere die Messeinheit, der erste Abschirmkörper und/oder der zweite Abschirmkörper können von dem Gehäuse axial und/oder radial umgeben sein. Das Gehäuse ist bevorzugt aus Stahl hergestellt. Dadurch kann eine besonders effektive Abschirmung der Messeinheit bzw. des Drehwinkelmesssystems gegenüber Störgrößen erzielt werden, die außen an dem Drehwinkelmesssystem auftreten und das Drehwinkelmesssystem negativ beeinflussen könnten.

Das Gehäuse ist bevorzugt auf den ersten Abschirmkörper und/oder auf den zweiten Abschirmkörper axial aufsetzbar. Vorzugsweise ist das Gehäuse als ein Topf ausgebildet, der axial über das Drehwinkelmesssystems, insbesondere die Messeinheit, aufgesetzt werden kann. Dadurch sind eine effektive Abschirmung sowie eine relativ einfache Montage des Drehwinkelmesssystems ermöglicht.

Die Erregereinheit kann ein Magnetträger mit zumindest zwei an dem Magnetträger festgelegten Magneten aufweisen. Dadurch ist eine relativ einfache und kostengünstige Herstellung und Montage der Erregereinheit geschaffen. Der Magnetträger ist magnetisch leitfähig und direkt gegenüber dem Sensor angeordnet, so dass eine Doppelabschirmung besteht, die ein Magnetfeldsystem genau definiert. Dadurch können die magnetischen Verhältnisse am Sensor, insbesondere einem Wiegandsensor, sichergestellt und eine Multiturnfunktionalität des Sensors ermöglicht werden.

In einer Ausgestaltung der Erfindung ist die Antriebswelle an einem dem freien Ende, an dem die Erregereinheit angeordnet ist, abgewandten bzw. gegenüberliegenden Wellenendbereich, insbesondere einem zweiten freien Ende, koaxial mit einer zweiten Welle verbunden ist, wobei die Antriebswelle aus einem magnetisch nicht oder nur gering leitfähigen Material, wie Titan oder Messing, und die zweite Welle aus Stahl hergestellt sein kann. Dadurch kann eine zusätzliche Abschirmung der Messeinheit gegenüber magnetischen Störeinflüssen erreicht werden.

Nachfolgend wird die Erfindung anhand einer bevorzugten Ausführungsform sowie zweier nicht in den Schutzbereich fallender Ausführungsformen unter Bezugnahme auf die anliegenden Zeichnungen näher erläutert.
Figur 1 zeigt schematisch eine perspektivische Ansicht einer nicht in den Schutzbereich fallenden Ausführung eines Drehwinkelmesssystems, wobei die Bauteile gesprengt dargestellt sind,
Figur 2 zeigt schematisch einen Ausschnitt der ersten Ausführung in einer seitlichen Schnittansicht,
Figur 3 zeigt schematisch einen Ausschnitt einer weiteren nicht in den Schutzbereich fallenden Ausführung eines Drehwinkelmesssystems in einer seitlichen Schnittansicht, und
Figur 4 zeigt schematisch einen Ausschnitt einer erfindungsgemäßen Ausführung eines Drehwinkelmesssystems in einer seitlichen Schnittansicht.

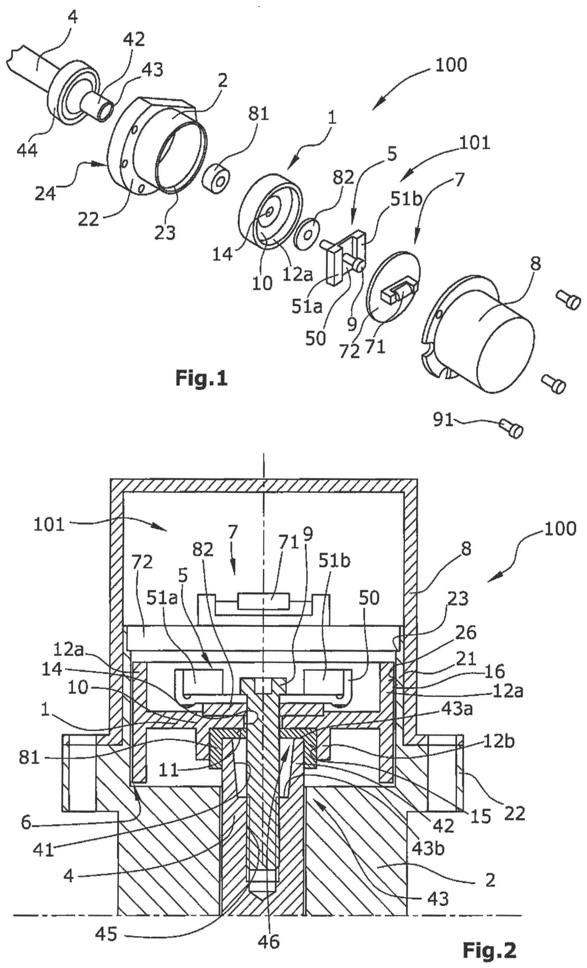

In den Figuren 1 bis 4 ist jeweils ein Drehwinkelmesssystem 100 gezeigt, das einen unmittelbaren Anbau bzw. eine direkte Kopplung einer Messeinheit 101 an eine Antriebswelle 4 vorsieht, wobei die Messeinheit 101 eine Erregereinheit 5 und eine Sensoreinheit 7 umfasst. Insbesondere ist das Drehwinkelmesssystem 100 an einem axialen Ende der Antriebswelle 4 angeordnet, so dass eine zusätzliche Welle für die Messeinheit 101 nicht erforderlich ist.

Die Antriebswelle 4 ist üblicherweise eine aus Stahl hergestellte Vollwelle, die geeignet ist, zumindest teilweise magnetisiert zu werden. Insbesondere kann die Antriebswelle 4 im Betrieb durch den nicht dargestellten Elektromotor oder durch eine nicht dargestellte, mit der Antriebswelle 4 in Kontakt stehende magnetische Bremse magnetisiert werden. Um dadurch entstehende Messfehler, insbesondere bei Magnet-basierten Messeinheiten 101, die in direktem Kontakt mit der Antriebswelle 4 stehen, zu verhindern, ist eine Abschirmung der Messeinheit 101 gegenüber solchen Magnetfeldern erforderlich. Vorliegend wird eine solche Abschirmung insbesondere durch eine geometrische Ausgestaltung der magnetisch leitfähigen Komponenten 1, 2, 4, 8 der Drehwinkelmesssystem 100 bewirkt, so dass die eine Messung störenden Magnetfelder um die Messeinheit 101 herum abgelenkt werden.

Wie in den Figuren 1 und 2 gezeigt, weist die Antriebswelle 4 an einem freien Ende 43 einen Hohlwellenabschnitt 42 auf, der in Richtung des freien Endes der Antriebswelle 4 konisch zusammenläuft. Dadurch ist an dem freien Ende 43 eine zylindrische oder kegelstumpfförmige Ausnehmung 41 in der Antriebswelle 4 ausgebildet, wobei an einer axialen Stirnseite der Antriebswelle 4 eine schmale umlaufende Stirnseitenfläche 43a vorhanden ist. Die Ausnehmung 41 kann beispielsweise mittels eines Drehmeißels oder auch durch eine koaxiale Bohrung hergestellt sein. Am Grund der Ausnehmung 41 ist eine von dem Hohlwellenabschnitt 42 umgebene zweite Stirnseitenfläche 43b der Antriebswelle 4 ausgebildet, die durch eine zu der Antriebswelle 4 koaxiale Bohrung 45 durchbrochen ist. In der Bohrung 45 ist ein Gewinde ausgebildet, mit dem eine Befestigungseinrichtung 9, vorliegend eine Schraube, in Eingriff steht. Die Schraube 9 ist aus einem magnetisch nicht oder nur gering leitendem Material hergestellt, beispielsweise mittels einer Titan-Aluminium-Vanadium-Legierung, so dass ein in der Antriebswelle 4 induziertes Magnetfeld an dem freien Ende 43 der Antriebswelle 4 nicht durch die Schraube 9 sondern lediglich in den Außenbereich bzw. in den Hohlwellenabschnitt 42 weitergeleitet wird. Die konische Ausgestaltung des Hohlwellenabschnitts 42 bewirkt eine Konzentrierung des in den Hohlwellenabschnitt 42 geleiteten Magnetfelds.

Um ein in den Hohlwellenabschnitt 42 geleitetes Magnetfeld nach außen hin bzw. um die Messeinheit 101 abzuleiten, ist ein erster Abschirmkörper 1 vorgesehen, der eine Ringscheibe 10 und einen radial außen an der Ringscheibe 10 umlaufenden ersten axialen Abschnitt 12a aufweist. Der erste Abschirmkörper 1 ist mit einem - wie in Figur 2 erkennbaren - zweiten axialen Abschnitt 12b axial auf die Antriebswelle 4 bzw. auf einen ersten Abstandshalter 81 aufgesetzt und mit der Antriebswelle 4 drehfest verbunden.

Der erste Abstandshalter 81 ist in Form einer zu der Antriebswelle 4 koaxial ausgerichteten Hülse mit einem Deckel aufgebaut und ist passgenau axial über das freie Ende 43 der Antriebwelle 4 gestülpt. An dem Deckel des ersten Abstandshalters 81 ist eine Öffnung vorgesehen, durch die sich die Schraube 9 erstreckt. Über den ersten Abstandshalter 81 ist der erste Abschirmkörper 1 passgenau aufgesetzt, so dass der erste Abschirmkörper 1 und der erste Abstandshalter 81 an der Antriebswelle 4 über die Schraube 9 festlegbar sind. Die Anordnung des ersten Abstandshalters 81 zwischen der Antriebswelle 4 und dem erstem Abschirmkörper 1 ermöglicht, dass der erste Abschirmkörper 1 in einem definierten axialen sowie radialen Abstand zu der Antriebswelle 4 angeordnet ist. Insbesondere sind eine Stirnseitenfläche 11 sowie eine an dem zweiten axialen Abschnitt 12b radial innen ausgebildete Übertragungsfläche 15 in einem konstanten Abstand zu der Antriebswelle 4 angeordnet. Dadurch ist eine gleichmäßige und kontinuierliche Übertragung eines Magnetfeldes von der Antriebswelle 4 auf den ersten Abschirmkörper 1 ermöglicht.

Es hat sich gezeigt, dass die Ableitung eines Magnetfeldes durch eine Beabstandung des ersten Abschirmkörpers 1 von der Antriebswelle 4 und somit eine Begrenzung der magnetischen Übertragung von der Antriebswelle 4 auf den ersten Abschirmkörper 1 optimiert werden kann. Als Begrenzungsmittel zwischen dem ersten Abschirmkörper 1 und der Antriebswelle 4 kann ein Luftspalt oder ein nicht-magnetisch leitfähiger Abstandshalter dienen. Daher ist der erste Abstandshalter 81 bevorzugt aus einem Material hergestellt, das keine oder nur eine geringe magnetische Leitfähigkeit aufweist, beispielsweise aus Aluminium. Dadurch ist eine über einen längeren Zeitraum konstante Übertragung eines Magnetfeldes von der Antriebselle 4 auf den ersten Abschirmkörper 1 möglich, ohne dass es zu einer erhöhten magnetischen Konzentration oder sogar zu einer magnetischen Sättigung in den Übertragungsflächen 11, 15 bzw. dem Übergangsmaterial des ersten Abschirmkörpers 1 kommt.

Die Ringscheibe 10 des ersten Abschirmkörpers 1 weist eine koaxiale Öffnung 14 auf, durch die sich die Schraube 9 erstreckt. Dadurch kann der erste Abschirmkörper 1 auf die axiale Stirnseitenfläche 43a der Antriebswelle 4 vorgespannt werden. Radial außen an der Ringscheibe 10 ist der erste axiale Abschnitt 12a ausgebildet, insbesondere ein koaxialer Zylinderabschnitt. Der erste axiale Abschnitt 12a erstreckt sich ausgehend von der Ringscheibe 10 beidseitig in Richtung hin zu und weg von der Antriebswelle 4. Der erste Abschirmkörper 1 ist aus einem magnetisch leitfähigen Material hergestellt, beispielsweise aus Eisen oder Stahl. Dadurch kann ein in den Flanken des Hohlwellenabschnitts 42 konzentriertes Magnetfeld in die Ringscheibe 10 und in den zweiten axialen Abschnitt 12b des ersten Abschirmkörper 1 übertragen werden und durch den ersten Abschirmkörper 1 nach radial außen in den ersten axialen Abschnitt 12a geleitet werden. Der erste axiale Abschnitt 12a des ersten Abschirmkörpers 1 ist im montierten Zustand von einem feststehenden zweiten Abschirmkörper 2 radial umgeben.

Der zweite Abschirmkörper 2 umfasst einen Flansch 22, von dem aus ein axialer Zylinderabschnitt 21 sich erstreckt. Der axiale Zylinderabschnitt 21 des zweiten Abschirmkörpers 2 umgibt den ersten axialen Abschnitt 12a des ersten Abschirmkörpers 1 mit einem geringen radialen Abstand, so dass der erste Abschirmkörper 1 innerhalb des zweiten Abschirmkörpers 2 frei drehbar ist. Dadurch sind eine äußere radiale Übertragungsfläche 16 des ersten axialen Abschnitts 12a und eine innere radiale Übertragungsfläche 26 des Zylinderabschnitts 21 mit einem geringen Luftspalt gegenüberliegend angeordnet. Dadurch kann ein Magnetfeld von dem ersten Abschirmkörper 1 an den zweiten Abschirmkörper 2 übertragen und weitergeleitet werden. Vorliegend weist der zweite Abschirmkörper 2 einen axialen Lagerabschnitt 24 auf, an dem ein Lager 44 der Antriebswelle 4 anliegt. Dadurch ist eine genaue Ausrichtung der Messeinheit 101 bezüglich der Antriebswelle 4 ermöglicht.

Der erste axiale Abschnitt 12a umgibt zumindest teilweise radial einen Raum, in dem die Erregereinheit 5 angeordnet ist. Die Erregereinheit 5 umfasst einen Magnetträger 50, an dem zwei Permanentmagnete 51a, 51b befestigt sind. Die Erregereinheit 5 ist über die Schraube 9 drehfest mit der Antriebswelle 4 verbunden, so dass die die Magnete 51a, 51b im Betrieb ein der Umdrehung der Antriebswelle 4 entsprechendes rotatorisches Magnetfeld aufbauen, welches von der Sensoreinheit 7 erfasst wird. Um eine Weiterleitung eines Magnetfelds von dem ersten Abschirmkörper 1 auf den Magnetträger 50 zu vermeiden, ist zwischen dem ersten Abschirmkörper 1 und der Erregereinheit 5 ein magnetisch nicht-leitfähiger zweiter Abstandshalter 82 vorgesehen. Der zweite Abstandshalter 82 ist vorliegend als eine Unterlegscheibe ausgebildet, die in eine axiale Ausnehmung an der Ringscheibe 10 eingesetzt, so dass ein Verrutschen oder Verschieben der Unterlegscheibe 82 sowie der Schraube 9 gegenüber der Ringscheibe 10 verhindert ist.

Die Schraube 9 erstreckt sich somit durch den Magnetträger 50, den zweiten Abstandshalter 82, den ersten Abschirmkörper 1 und den ersten Abstandshalter 81 bis in die Antriebswelle 4, so dass die zuvor genannten Komponenten des Drehwinkelmesssystems 100 an der Antriebswelle 4 festgelegt sind. Hierbei ist die Schraube 9 bevorzugt koaxial mit der Antriebswelle 4 verbunden und in Bezug auf die radial inneren Seitenwände des Hohlwellenabschnitts 42 berührungsfrei in der Ausnehmung 41 angeordnet.

Die Sensoreinheit 7 ist feststehend und umfasst insbesondere einen an einem Sensorträger 72 befestigten Sensor 71, beispielsweise einen Hall-und/oder Wiegand-Sensor. Der Sensor 71 ist in einer Ausführung zur Erfassung einer jeden Umdrehung der Antriebswelle 4 geeignet. Die Sensoreinheit 7 kann ferner eine nicht dargestellte Verarbeitungselektronik umfassen. Der Sensorträger 72 ist als eine runde Scheibe ausgebildet, die im montierten Zustand an einem Absatz 23 des zweiten Abschirmkörpers 2 anliegt. Der Sensorträger 72 bildet dadurch einen Deckel für die innerhalb des axialen Abschnitts 12a des ersten Abschirmkörpers 1 angeordnete Erregereinheit 5.

Ein feststehendes Gehäuse 8 umgibt schließlich sowohl den ersten Abschirmkörper 1 als auch den zweiten Abschirmkörper 2 zumindest teilweise. Dabei kann das Gehäuse 8 in einfacher Weise über den Zylinderabschnitt 21 des zweiten Abschirmkörpers 2 aufgesteckt und mittels Schrauben 91 an dem Flansch 22 des zweiten Abschirmkörpers 2 befestigt werden. Das Gehäuse 8 kann aus Stahl sein, so dass ein von dem zweiten Abschirmkörper 2 in das Gehäuse 8 übertragenes Magnetfeld nach außen hin ableitbar ist.

Es sollte deutlich sein, dass zumindest die Antriebswelle 4, der zweite Abschirmkörper 2, der erste Abstandshalter 81, der erste Abschirmkörper 1, der zweite Abstandshalter 82, die Schraube 9, der Sensorträger 72 und das Gehäuse 8 eine gemeinsame Längsachse aufweisen. Es besteht somit die Möglichkeit, einen hochauflösenden magnetischen Multiturnsensoreinheit 7 mit Magnetfeldabschirmung in einen Motor zu integrieren.

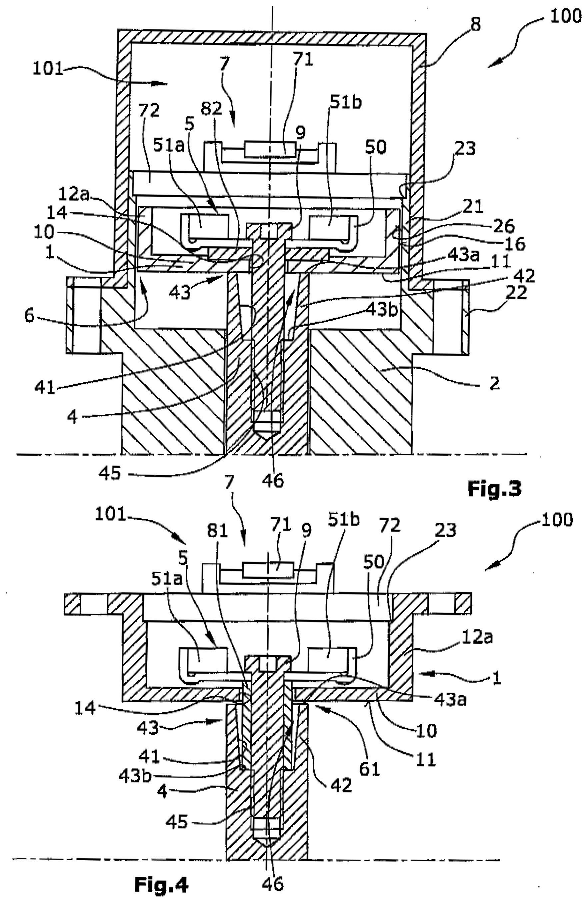

In der Figur 3 ist eine alternative nicht in den Schutzbereich fallende Ausgestaltung gezeigt, die überwiegend - bis auf beispielsweise die Ausgestaltung sowie der Anordnung des ersten Abschirmkörpers 1 in Bezug auf die Antriebswelle 4 - der in den Figuren 1 und 2 gezeigten Ausgestaltung entspricht.

In der in Figur 3 gezeigten Ausgestaltung des Drehwinkelmesssystems 100 ist wieder eine Antriebswelle 4 mit einem an einem freien Ende 43 ausgebildeten Hohlwellenabschnitt 42 vorgesehen. Ein erster Abschirmkörper 1 liegt mit einer Stirnseitenfläche 11 einer Ringscheibe 10 unmittelbar an einer axialen Stirnseitenfläche 43a der Antriebswelle 4 an. Ein erster Abstandshalter 81 ist nicht vorgesehen. Dadurch kann eine direkte Übertragung eines in der Antriebswelle 4 vorherrschenden Magnetfeldes in den ersten Abschirmkörper 1 erfolgen. Zur Weiterleitung des Magnetfeldes von dem ersten Abschirmkörper 1 auf einen zweiten Abschirmkörper 2 ist radial außen an der Ringscheibe 10 ein umlaufender axialer Abschnitt 12a ausgebildet, der zylindrisch ausgebildet ist und sich einseitig von der Ringscheibe 10 in Richtung weg von der Antriebswelle 4 erstreckt. Dem axialen Abschnitt 12a gegenüberliegend ist wiederum ein Zylinderabschnitt 21 des zweiten Abschirmkörpers 2 beabstandet angeordnet. Dadurch kann eine effektive Abschirmung der Messeinheit 101 erfolgen.

In der Figur 4 ist eine Ausgestaltung der Erfindung gezeigt, die wiederum überwiegend - bis auf beispielsweise die Ausgestaltung sowie die Anordnung des ersten Abschirmkörpers 1 in Bezug auf die Antriebswelle 4 - der in den Figuren 1 und 2 gezeigten Ausgestaltung entspricht.

In der in Figur 4 gezeigten Ausgestaltung des Drehwinkelmesssystems 100 ist wiederum eine Antriebswelle 4 vorgesehen, die an einem freien Ende 43 einen kegelstumpfförmigen Hohlwellenabschnitt 42 mit einer Ausnehmung 41 aufweist. In der Ausnehmung 41 ist ein erster Abstandshalter 81 eingesetzt ist, der drehfest mit der Antriebswelle 4 verbunden ist und dessen axiale Länge die axialen Länge der Ausnehmung 41 deutlich überragt. Dadurch steht der erste Abstandshalter 81 dem freien Ende 43 der Antriebswelle 4 hervor. Der erste Abstandshalter 81 ist vorzugsweise aus einem Material, das nur eine geringe magnetische Leitfähigkeit aufweist, beispielsweise aus Aluminium. Durch den ersten Abstandshalter 81 erstreckt sich eine als Schraube ausgebildete Befestigungseinrichtung 9. Die Schraube 9 ist ebenfalls aus einem magnetisch nicht oder nur gering leitendem Material hergestellt, so dass ein in der Antriebswelle 4 induziertes Magnetfeld, nicht über den ersten Abstandhalter 81 und/oder die Schraube 9 weitergleitet wird, sondern in den radial außen angeordneten Flanken des Hohlwellenabschnitts 42 konzentriert wird.

An dem aus dem Hohlwellenabschnitt 42 hervorstehenden freien Ende des ersten Abstandshalters 81 ist ein Magnetträger 50 einer Erregereinheit 5 mittels der Schraube 9 auf die Antriebswelle 4 vorgespannt. An dem Magnetträger 50 sind zwei Permanentmagnete 51a, 51b befestigt, die im Betrieb ein der Umdrehung der Antriebswelle 4 entsprechendes rotatorisches Magnetfeld aufbauen, welches von einem Sensor 71 einer Sensoreinheit 7 erfassbar ist. Der Sensor 71 ist von einem in der Figur 4 nicht dargestellten Gehäuse 8 umgeben.

Ein erster Abschirmkörper 1 ist mit einer Stirnseitenfläche 11 einer Ringscheibe 10 in einem definierten Abstand von einer axialen Stirnseitenfläche 43a der Antriebswelle 4 angeordnet, so dass ein axialer Luftspalt 61 zwischen dem ersten Abschirmkörper 1 und der Antriebswelle 4 ausgebildet ist. Der erste Abschirmkörper 1 ist vorliegend als eine feststehende Komponente des Drehwinkelmesssystems 100 ausgebildet. Der erste Abschirmkörper 1 kann zweiteilig aufgebaut sein, so dass der erste Abschirmkörper 1 zwei Hälften aufweist, die radial ineinander steck- bzw. setzbar sind. Zudem kann der erste Abschirmkörper 1 über einen Flansch an dem in Figur 4 nicht dargestellten Gehäuse 8 befestigt sein. Durch eine koaxiale Öffnung 14 der Ringscheibe 10 erstrecken sich die Schraube 9 und der erste Abstandshalter 81. Der Durchmesser dieser Öffnung 14 ist kleiner als der Durchmesser der radial inneren Flanken des Hohlwellenabschnitts 42. Radial außen an der Ringscheibe 10 ist ein umlaufender axialer Abschnitt 12a ausgebildet, der zylindrisch ausgebildet ist und sich einseitig von der Ringscheibe 10 in Richtung weg von der Antriebswelle 4 erstreckt. Der erste Abschirmkörper 1 ist feststehend und nicht mit der Antriebswelle 4 verbunden. Der erste Abschirmkörper 1 ist aus einem magnetisch leitfähigen Material hergestellt, beispielsweise aus Eisen oder Stahl. Dadurch kann ein in den Flanken des Hohlwellenabschnitts 42 konzentriertes Magnetfeld über den axialen Luftspalt 61 in die Ringscheibe 10 übertragen und schließlich nach radial außen in den axialen Abschnitt 12a um die Erregereinheit 5 und die Sensoreinheit 7 geleitet werden. Die Messeinheit 101 kann dadurch gegenüber einem in der Antriebswelle 4 induzierten Magnetfeld effektiv abgeschirmt werden.

### Bezugszeichen

- 100: Drehwinkelmesssystem
- 101: Messeinheit

- 1: erster Abschirmkörper
- 10: Ringscheibe
- 11: Front-/Stirnseitenfläche der Ringscheibe
- 12a: erster axialer Abschnitt
- 12b: zweiter axialer Abschnitt
- 13: Absatz, Steg, Flansch
- 14: koaxiale Öffnung
- 15: radiale Übertragungsfläche
- 16: radiale Übertragungsfläche

- 2: zweiter Abschirmkörper
- 21: Zylinder
- 22: Absatz, Steg, Flansch
- 23: Absatz, Steg, Flansch
- 24: Lagerabschnitt
- 26: radiale Übertragungsfläche

- 4: Antriebswelle
- 41: Ausnehmung
- 42: Hohlwellenabschnitt
- 43: freies Ende
- 43a: axiale Stirnseitenfläche an dem freien Ende
- 43b: axiale Stirnseitenfläche innerhalb der Ausnehmung
- 44: Wellenlager
- 45: Bohrung mit Gewinde
- 46: radialer Luftspalt
- 5: Erregereinheit
- 50: Magnetträger
- 51a: Permanentmagnet, Magnet
- 51b: Permanentmagnet, Magnet

- 6: radialer Abstand, Luftspalt
- 61: axialer Abstand, Luftspalt

- 7: Sensoreinheit
- 71: Sensor
- 72: Sensorträger

- 8: Gehäuse
- 81: erster Abstandshalter
- 82: zweiter Abstandshalter, Unterlegscheibe

- 9: Befestigungseinrichtung, Schraube
- 91: Schraube

## Patentansprüche

1. Magnet-basiertes Drehwinkelmesssystem (100) zum Erfassen einer Drehbewegung einer Antriebswelle (4), mit
einer Antriebswelle (4),
einer mit der Antriebswelle (4) an einem freien Ende (43) drehfest verbundenen Erregereinheit (5), und
einer feststehenden Sensoreinheit (7), die zum Erfassen einer Drehbewegung der Antriebswelle (4) mit der Erregereinheit (5) funktional zusammenwirkt,
**dadurch gekennzeichnet, dass**
die Antriebswelle (4) im Bereich des freien Endes (43) eine koaxiale Ausnehmung (41) aufweist, so dass ein Hohlwellenabschnitt (42) ausgebildet ist, wobei die Erregereinheit (5) mittels einer sich durch die Ausnehmung (41) erstreckenden Befestigungseinrichtung (9) an der Antriebswelle (4) festgelegt ist, wobei in dem Bereich des Hohlwellenabschnitts (42) zwischen der Antriebswelle (4) und der Befestigungseinrichtung (9) ein radialer Luftspalt (46) ausgebildet ist, wobei ein erster Abschirmkörper (1) vorgesehen ist, der eine zu der Antriebswelle (4) koaxiale Ringscheibe (10), die zwischen der Erregereinheit (5) und der Antriebswelle (4) angeordnet ist, und einen radial außen an der Ringscheibe (10) umlaufenden ersten axialen Abschnitt (12a) aufweist, und
wobei ein axialer und/oder radialer Luftspalt zwischen dem ersten Abschirmkörper (1) und der Antriebswelle (4) ausgebildet ist, sodass der erste Abschirmkörper (1) feststehend ist.

2. Magnet-basiertes Drehwinkelmesssystem (100) nach Anspruch 1, **dadurch gekennzeichnet, dass**
die Ausnehmung (41) kegelstumpfförmig ausgebildet ist.

3. Magnet-basiertes Drehwinkelmesssystem (100) nach einem der voranstehenden Ansprüche, **dadurch gekennzeichnet, dass**
der erste Abschirmkörper (1) zumindest einen Absatz (13, 22, 23) aufweist, an dem die Sensoreinheit (7) und/oder ein Gehäuse (8) festlegbar sind.

4. Magnet-basiertes Drehwinkelmesssystem (100) nach einem der voranstehenden Ansprüche,
**dadurch gekennzeichnet, dass**
zwischen dem ersten Abschirmkörper (1) und der Antriebswelle (4) ein erster Abstandshalter (81) angeordnet ist.

5. Magnet-basiertes Drehwinkelmesssystem (100) nach einem der voranstehenden Ansprüche,
**dadurch gekennzeichnet, dass**
der erste Abschirmkörper (1) mit einer axialen Stirnseitenfläche (11) der Ringscheibe (10) in einem definierten Abstand (61) von dem freien Ende (43) des Hohlwellenabschnitts (42) angeordnet ist.

6. Magnet-basiertes Drehwinkelmesssystem (100) nach einem der voranstehenden Ansprüche,
**dadurch gekennzeichnet, dass**
ein Gehäuse (8) vorgesehen ist, dass das Drehwinkelmesssystem (100) zumindest teilweise umgibt.

7. Magnet-basiertes Drehwinkelmesssystem (100) nach Anspruch 6, **dadurch gekennzeichnet, dass**
das Gehäuse (8) auf den ersten Abschirmkörper (1) axial aufsetzbar ist.

8. Magnet-basiertes Drehwinkelmesssystem (100) nach einem der voranstehenden Ansprüche,
**dadurch gekennzeichnet, dass**
die Erregereinheit (5) einen Magnetträger (50) mit zumindest einem an dem Magnetträger (50) festgelegten Magnet (51a, 51b) aufweist.

## Claims

1. Magnet-based angular displacement measuring system (100) for measuring a rotational movement of a driveshaft (4), comprising
a drive shaft (4),
an exciter unit (5) rotationally coupled to the free end (43) of the drive shaft (4), and
a stationary sensor unit (7) which functionally cooperates with the exciter unit (5) for measuring the rotational movement of the drive shaft (4),
**characterized in that**
the drive shaft (4), at the free end (43) thereof, has a coaxial recess (41) such that a hollow shaft section (42) is formed, wherein the exciter unit (5) is fixed on the drive shaft (4) by means of a fastening means (9) extending through the recess (41), wherein a radial air gap (46) is formed in the region of the hollow shaft section (42) between the drive shaft (4) and a fastening means (9),
wherein a first shielding body (1) is provided comprising an annular disc (10) coaxial to the drive shaft (4) and arranged axially between the exciter unit (5) and the drive shaft (4), and comprising a first axial section (12a) extending circumferentially on the radial outer side of the annular disc (10), and
wherein an axial and/or radial air gap is formed between the first shielding body (1) and the drive shaft (4), such that the first shielding body (1) is stationary.

2. Magnet-based angular displacement measuring system (100) according to claim 1, **characterized in that** the recess (41) is frustoconical in shape.

3. Magnet-based angular displacement measuring system (100) according to one of the preceding claims, **characterized in that** the first shielding body (1) has at least one shoulder (13, 22, 23) to which the sensor unit (7) and/or a housing (8) can be fixed.

4. Magnet-based angular displacement measuring system (100) according to one of the preceding claims, **characterized in that** a first spacer (81) is arranged between the first shielding body (1) and the drive shaft (4).

5. Magnet-based angular displacement measuring system (100) according to one of the preceding claims, **characterized in that** the first shielding body (1) with an axial end face (11) of the annular disc (10) is arranged at a defined distance (61) from the free end (43) of the hollow shaft section (42).

6. Magnet-based angular displacement measuring system (100) according to one of the preceding claims, **characterized in that** a housing (8) is provided that surrounds the angular displacement measuring system (100) at least partly.

7. Magnet-based angular displacement measuring system (100) according to claim 6, the housing (8) can be set axially on the first shielding body (1).

8. Magnet-based angular displacement measuring system (100) according to one of the preceding claims, **characterized in that** the exciter unit (5) comprises a magnet carrier (50) with at least one magnet (51a, 51b) fixed on the magnet carrier (50).

## Revendications

1. Système magnétique de mesure d'angle de rotation (100) pour détecter un mouvement de rotation d'un arbre d'entrainement (4), comportant
un arbre d'entrainement (4),
une unité d'excitation (5) reliée, de manière solidaire en rotation, avec l'arbre de rotation (4) sur une extrémité (43) libre, et
une unité capteur (7) fixe coopérant fonctionnellement avec l'unité d'excitation (5) pour détecter un mouvement de rotation de l'arbre d'entrainement (4),
**caractérisé en ce que**
l'arbre d'entrainement (4) présente un évidement (41) dans la région de l'extrémité (43) libre, de sorte qu'une section d'arbre creux (42) est formée, ladite unité d'excitation (5) étant immobilisée sur l'arbre d'entrainement (4) par un moyen de fixation (9) s'étendant à travers ledit évidement (41), un entrefer (46) radial étant formé dans la région de la section d'arbre creux (42) entre l'arbre d'entrainement (4) et le moyen de fixation (9),
un premier corps de blindage (1) qui présente une disque annulaire (10) coaxiale à l'arbre d'entrainement (4), disposée entre ladite unité d'excitation (5) et l'arbre d'entrainement (4), et une première section (12a) axiale s'étendant de manière circonférentielle radialement sur l'extérieur de la disque annulaire (10), et
un entrefer axial et/ou radial étant formé entre le premier corps de blindage (1) et l'arbre d'entrainement (4), de sorte que le premier corps de blindage (1) est fixe.

2. Système magnétique de mesure d'angle de rotation (100) selon la revendication 1, **caractérisé en ce que** l'évidement (41) est de forme tronconique.

3. Système magnétique de mesure d'angle de rotation (100) selon l'une quelconque des revendications précédentes, **caractérisé en ce que** le premier corps de blindage (1) présente au moins un épaulement (13, 22, 23) sur lequel l'unité capteur (7) et/ou un carter (8) peuvent être fixé.

4. Système magnétique de mesure d'angle de rotation (100) selon l'une quelconque des revendications précédentes, **caractérisé en ce qu'**une première entretoise (81) est disposée entre le premier corps de blindage (1) et l'arbre d'entrainement (4).

5. Système magnétique de mesure d'angle de rotation (100) selon l'une quelconque des revendications précédentes, **caractérisé en ce que** le premier corps de blindage (1), par une face de front (11) axiale de la disque annulaire (10), est disposée à une distance (61) définie de l'extrémité libre (43) de la section d'arbre creux (42).

6. Système magnétique de mesure d'angle de rotation (100) selon l'une quelconque des revendications précédentes, **caractérisé en ce qu'**un carter (8) est prévu qui entoure le système de mesure d'angle de rotation (100) au moins partiellement.

7. Système magnétique de mesure d'angle de rotation (100) selon la revendication 6, **caractérisé en ce que** le carter (8) peut être appliqué axialement sur le premier corps de blindage (1).

8. Système magnétique de mesure d'angle de rotation (100) selon l'une quelconque des revendications précédentes, **caractérisé en ce que** ladite unité d'excitation (5) comprend un porte-aimant (50) avec au moins un aimant (51a, 51b) fixé sur le porte-aimant (50).
